Europäisches Patentamt

European Patent Office

Office européen des brevets

(11) Veröffentlichungsnummer: **0 259 555 B1**

(12) **EUROPÄISCHE PATENTSCHRIFT**

(45) Veröffentlichungstag der Patentschrift: 27.11.91

(51) Int. Cl.⁵: **C08L 27/06**, C08K 7/02,
//(C08L27/06,1:02)

(21) Anmeldenummer: 87109460.3

(22) Anmeldetag: 01.07.87

(54) **Verwendung von natürlichen Cellulosefasern als Beimischung zu Polyvinylchlorid.**

(30) Priorität: 11.09.86 DE 3630937

(43) Veröffentlichungstag der Anmeldung:
16.03.88 Patentblatt 88/11

(45) Bekanntmachung des Hinweises auf die
Patenterteilung:
27.11.91 Patentblatt 91/48

(84) Benannte Vertragsstaaten:
**ES FR GB IT SE**

(56) Entgegenhaltungen:
US-A- 4 343 727

**RESEARCH DISCLOSURE, Nr. 246, Oktober
1984, Seite 477, Emsworth, Hampshire, GB;
Anonym: "Heat distortion modifier for PVC"**

**H. Katz et al: "Handbook of Fillers and Reinforcements for Plastics, van Nostrand Reinhold Co., S.292-297**

(73) Patentinhaber: **REHAU AG + Co
Rheniumhaus
W-8673 Rehau(DE)**

(72) Erfinder: **Der Erfinder hat auf seine Nennung
verzichtet**

## Beschreibung

Die Erfindung betrifft die Verwendung von natürlichen Cellulosefasern als Beimischung zu Polyvinylchlorid zur Einschränkung des Rückschrumpfes von Bändern und Profilen.

Die Verwendung von natürlichen Cellulosefasern als Füllstoffe in der verarbeitenden Industrie ist bekannt. Es handelt sich hierbei um hochreine weiße Pulver oder Fasern mit einem Cellulosegehalt von mindestens 99,5 %, bezogen auf die Trockensubstanz. Derartige Cellulosefüllstoffe zeichnen sich durch ausgewogene Schüttgewichte aus, die eine optimale Einarbeitung in den Grundstoff gewährleisten. Die Cellulosefüllstoffe sind nicht abrasiv und weitgehend inert gegen Säuren, Laugen und Lösungsmittel.

Besonders vorteilhaft bei der Einmischung von Cellulosefüllstoffen in fließfähige Grundmaterialien ist die Tatsache, daß die einzelnen Fasern aufgrund des Herstellungsprozesses eine fibrillierte Oberfläche aufweisen, die eine optimale Verankerung im Grundmaterial gewährleistet. Die Fasern werden aus Holz gewonnen, welche entsprechend zerkleinert und chemisch von Lignin und anderen Verunreinigungen gereinigt wird. Das Cellulose-Rohmaterial wird im Anschluß an den Reinigungsprozess zu den verschiedensten Faserlängen vermahlen.

Bei der Herstellung von Bändern und Profilen aus Polyvinylchlorid hat sich als nachteilig herausgestellt, daß bei der Verwendung der Bänder oder Profile bei erhöhter Temperatur ein erheblicher Rückschrumpf auftritt, der z.B. geprüft bei 110° C über eine Stunde, in der Größenordnung zwischen 2-4 % der Ursprungslänge liegt. Eine derartige Längenreduzierung ist in vielen Fällen nicht akzeptierbar.

Man hat zwar durch den Einsatz spezieller Werkzeuge erreicht, daß der Rückschrumpf auf ca. 1,5 % reduziert werden konnte, jedoch ist auch dieser Wert noch zu hoch.

Auch die Verwendung von Füllstoffen ist in der Verarbeitung von Polyvinylchlorid bekannt. Verwendet werden hier beispielsweise körnige Füllstoffe wie Calziumcarbonat u.ä. Das Schrumpfverhalten von Bändern und Profilen wird durch solche Füllstoffe nur graduell verbessert.

Wird Holzmehl als Füllstoff zu Polyvinylchlorid verwendet, so kann festgestellt werden, daß hier zwar eine Erniedrigung des Rückschrumpfes zu erzielen ist, die Schlagzähigkeitswerte dagegen werden ganz erheblich reduziert und es ist festzustellen, daß die Oberflächengüte von Bändern und Profilen, die mit Holzmehl als Füllstoff beladen sind, nicht mehr den gestellten Anforderungen entspricht. Außerdem hat sich gezeigt, daß bie der Verwendung von Holzmehl als Füllstoff die Bänder und Profile sich in einer Art verfärben, daß sich in vielen späteren Anwendungsfällen nicht mehr tolerierbare Einschränkungen ergeben.

Bei der Verwendung von Glasfasern als Füllstoffe bei der Herstellung von Bändern und Profilen aus Polyvinylchlorid ergibt sich ein starker Abfall der Schlagzähigkeitswerte sowie eine nicht geschlossene, rauhe Oberfläche der Bänder und Profile, die bei vielen Anwendungsbereichen nicht mehr tolerierbar ist. Ferner stellt sich als nachteilig bei der Verwendung derartiger Füllstoffe heraus, daß sich ein erhöhter Werkzeugverschleiß bei der Herstellung und auch bei der Weiterverarbeitung ergibt.

Hier setzt die Erfindung ein, die sich die besonderen Eigenschaften der natürlichen Cellulosefasern als Füllstoffe bei der Verarbeitung von fließfähigen Grundstoffen zunutze macht.

Erfindungsgemäß wird vorgeschlagen, daß die natürlichen Cellulosefasern als Beimischung zu Polyvinylchlorid mit einem Faseranteil von 1-40 Gewichtsprozent, vorzugsweise von 3-20 Gewichtsprozent, mit einer Faserdicke bis zu 40μm und einer Faserlänge, die im Streubereich zwischen dem Faserdurchmesser bis zu einer Abmessung von 400μm liegt, zur Einschränkung des Rückschrumpfes sowie zur Verbesserung der mechanischen und/oder Oberflächeneigenschaften von verstärkten Bändern und Profilen verwendet werden.

Bänder und Profile aus Polyvinylchlorid, die in der erfindungsgemäßen Abmischungstoleranz mit den natürlichen Cellulosefasern gefüllt sind, weisen bei einer Lagerung von einer Stunde und 110° C einen Rückschrumpfwert auf, der weit unter 1 % liegt. Aufgrund der weichen Konsistenz der Füllstoff-Fasern wird bei derart gefüllten Bändern und Profilen eine optimale Oberfläche erzielt, die jede weitere Bearbeitung wie Lackieren usw. zuläßt. Der hohe Weißgrad der natürlichen Cellulosefasern ergibt keinerlei Farbbeeinträchtigung der mit diesem Füllstoff gefüllten Bänder und Profile, wenn die mit diesem Füllstoff versehenen Bänder und Profile bereits im Urformprozess durch Zusatz von Farbpigmenten zu dem thermoplastischen Grundstoff Polyvinylchlorid eingefärbt werden.

Die mit natürlichen Cellulosefasern gefüllten Bänder und Profile aus Polyvinylchlorid besitzen eine gute Kerbschlagzugzähigkeit, so daß ein Splittern der Bänder und Profile beispielsweise bei mechanischer Weiterverarbeitung nicht erfolgt. Daneben ist wesentlich der Vorteil, der sich durch den vernachlässigbar niedrigen Rückschrumpf der erfindungsgemäß mit natürlichen Cellulosefasern gefüllten Bänder und Profile ergibt. Der Begriff Profile umfaßt in seiner Bedeutung alle profilierten Gegenstände wie Vollprofile, Hohlprofile, Rohre usw.

In besonderen Fällen hat es sich als vorteilhaft erwiesen, wenn vor der Beimischung der natürlichen Cellulosefasern in den erfindungsgemäßen Mischungsbereichen die Fasern mit einem Haftvermittler belegt werden. Obwohl durch das Herstellungsverfahren bedingte fibrillierte Oberfläche der Einzelfasern bereits eine sehr gute Haftung der Fasern im Grundstoff erzielt werden kann, da der fließfähige, thermoplastische Grundstoff die einzelnen Fibrillen hintergreift, kann es in gewissen Anwendungsbereichen vorteilhaft sein, diese Haftung durch vorheriges Aufbringen von Haftvermittler auf die Fasern noch zu verstärken. Der Haftvermittler kann beispielsweise durch Versprühen auf die Fasern aufgebracht werden. Im Einzelfall kann es erforderlich sein, die Fasern nach einem solchen Sprühvorgang nochmals einem Mahlprozess zu unterwerfen.

Die erfindungsgemäß angegebene Länge der natürlichen Cellulosefasern bis zu 400μm ist ein Erfahrungswert, der durch Versuche festgestellt wurde. Bei der Verwendung von Fasern größerer Längenabmessungen wurde festgestellt, daß sich in diesem Fall die Fasern beim Einmischen in den thermoplastischen Grundstoff gewissermaßen verknoten, jedenfalls nachteilige Verdickungen bilden, die sich auch an der Oberfläche der Bänder und Profile abzeichnen können. Solche Verknotungen können mit den bei der großtechnischen Kunststoffverarbeitung üblichen Mischverfahren nicht mehr gelöst werden.

Die nachstehenden Beispiele zeigen in der Gegenüberstellung zwischen Profilen, die erfindungsgemäß mit natürlichen Cellulosefasern gefüllt sind, und solchen, bei denen andere Füllstoffe verwendet wurden, die besonders günstigen Eigenschaften der ersteren Profile.

Beispiel 1:

Gefertigt wurde ein extrudiertes Band der Abmessung 23 mm Breite, 3 mm Wanddicke, wie es in der Möbelindustrie zur Kantenbegrenzung von Platten verwendet wird. Zur Anwendung kam folgende Zusammensetzung:
100 Gewichtsteile Suspensions-PVC K-Wert 65
2 Gewichtsteile Bleistabilisator
1,5 Gewichtsteile Gleitmittel
2 Gewichtsteile Polymethylmetacrylat-Pulver als Fließhilfe
35 Teile Cellulose-Füllstoff in der erfindungsgemäßen Abmischung
Farbpigmente
Bei den Cellulosefasern handelt es sich um einen Füllstoff mit einem mittleren Faserdurchmesser von 15μm und einer Faserlänge mit 99% kleiner als 150μm. Die Mischungsaufbereitung einschließlich des Einmischens der Cellulosefasern erfolgte in einem branchenüblichen Schnellmischer.

Das extrudierte Profil besaß eine matte, geschlossene Oberfläche. Die Rückschrumpfprüfung ergab nach Lagerung von einer Stunde bei 110° C einen Wert von 0,3%. Die Kerbschlagzugzähigkeit gemäß DIN 53448 wurde mit 45 KJ/m$^2$ bestimmt.

Das gefertigte Band konnte mit diesen optimalen Einstellungen direkt zur Weiterverarbeitung an die Möbelindustrie ausgeliefert werden.

Beispiel 2:

Gegenüber Beispiel 1 wurde in der Rezeptur der Artikel Cellulosefüllstoff durch die gleiche Menge Holzmehl mit einer Teilchenlänge von 150μm ersetzt.

Es wurde zwar auch bei diesem Profil ein Schrumpf von nur 0,6% bei der Rückschrumpfprüfung erreicht, die Profiloberfläche war jedoch rauh und schuppig. Darüber hinaus fand bei dem Profil durch die bräunliche Eigenfarbe des Holzmehls eine starke Farbverschiebung statt, die die in der Möbelindustrie zum Beispiel geforderten hellen Farbtöne nicht mehr zuläßt.

Die Kerbschlagzugzähigkeit gemäß DIN 53448 wurde mit 27 KJ/cm$^2$ bestimmt. Sie liegt damit erheblich niedriger als bei Beispiel 1.

Beispiel 3:

Hier wurde die abmessungsgleiche Cellulosefaser des Beispiels 1 in einem völlig anderen Rezepturaufbau verwendet. Aufgabe war die Herstellung weitgehend antistatischer Profile, die neben geringem Schrumpf auch hohe Anforderungen an die Oberflächengüte erfüllen mußten. Zur Anwendung kam folgende Zusammensetzung:
100 Gewichtsteile Emulsions-PVC K-Wert 65
1,2 Gewichtsteile Zinnstabilisator
2,8 Teile Gleitmittelgemisch
1,2 Gewichtsteile Polymethylmetacylat-Pulver als Fließhilfe
5 Gewichtsteile Cellulosefüllstoff
Farbpigmente
Hergestellt wurde ein Bandprofil mit 24 mm Breite und 2 mm Wanddicke. Erzielt wurde bei der Herstellung ein Bandprofil mit einer satinierten, glatten, geschlossenen Oberfläche und einem einwandfreien Farbausfall. Der hohe Weißgrad des verwendeten Füllstoffes Cellulosefaser hat praktisch keinen selbstfärbenden Einfluß auf den Profilausfall.

Der Rückschrumpf wurde nach Lagerung von einer Stunde bei 110° C mit 0,7% bestimmt. Die Kerbschlagzugzähigkeit nach DIN 53338 betrug in diesem Fall 96 KJ/m$^3$.

Auch dieses Profil konnte aufgrund seiner Eigenschaften ohne weitere Aufwendungen der späteren Weiterverarbeitung zugeführt werden.

Beispiel 4:

Hier wurde ein Profil der Abmessungen gemäß Beispiel 3 hergestellt, jedoch nicht mit Cellulosefasern als Füllstoff, sondern mit einem körnigen Füllstoff. Zur Anwendung kam folgende Zusammensetzung:
100 Gewichtsteile Emulsions-PVC K-Wert 65
1,2 Gewichtsteile Zinnstabilisator
2,8 Gewichtsteile Gleitmittelgemisch
1,2 Gewichtsteile Polymethylmetacrylat-Pulver als Fließhilfe
7 Gewichtsteile Calziumcarbonat mittlerer Korngröße von 3µ

Das extrudierte Profil wies eine matte Oberfläche auf. Bei der Prüfung auf Rückschrumpf ergab sich nach Lagerung von einer Stunde bei 110° C ein Wert von 2,3%. Die Kerbschlagzugzähigkeit nach DIN 53448 wurde mit 99 KJ/m³ bestimmt.

Beispiel 5:

Hier wurde als Grundstoff ein besonders schlagzäh modifiziertes Polyvinylchlorid hart verwendet, wie es vielfältig in der weiterverarbeitenden Industrie eingesetzt wird. Der Mischprozess war identisch mit Beispiel 1, genauso wie die Profilabmessungen. Zur Anwendung kam folgende Zusammensetzung:
92 Gewichtsteile Suspensions-PVC K-Wert 65
8 Gewichtsteile Metacrylat-Butadien-Styrol-Polymer als Schlagzähkomponente
2 Gewichtsteile Bleistabilisator
1,8 Gewichtsteile Gleitmittelgemisch
1 Gewichtsteil Polymethylmetacrylat als Fließhilfe
18 Gewichtsteile Cellulose-Füllstoff mit Faserverteilung 99% kleiner als 250µm und einem Faserdurchmesser von ca 25µm.

Das extrudierte Profil wies eine matte, geschlossene Oberfläche auf. Bei der Prüfung auf Rückschrumpf ergab sich nach Lagerung von einer Stunde bei 110° C ein Wert von 0,4%. Die Kerbschlagzugzähigkeit nach DIN 53448 wurde mit 140 KJ/m³ bestimmt.

Beispiel 6:

Dieses Beispiel dient dem Nachweis, daß auch bei hoher Dosierung körnige, nichtfasrige Füllstoffe, die gelegentlich zur Reduzierung des Rückschrumpfes empfohlen werden, nur graduell wirksam sind.
Es wurde ein Band gemäß Beispiel 1 hergestellt. Zur Anwendung kam folgende Zusammensetzung:
92 Gewichtsteile Suspensions-PVC K-Wert 65
8 Gewichtsteile Metacrylat-Butadien-Styrol-Polymer als Schlagzähkomponente
2 Gewichtsteile Bleistabilisator

1,8 Gewichtsteile Gleitmittelgemisch
1 Teil Polymethylmetacrylat als Fließhilfe
40 Teile Calziumcarbonat-Füllstoff mittlerer Teilchengröße von 3µ

Das extrudierte Profil wies eine geschlossene Oberfläche auf. Bei der Prüfung auf Rückschrumpf ergab sich nach Lagerung von einer Stunde bei 110° C ein Wert von 2,2%. Die Kerbschlagzugzähigkeit gemäß DIN 53448 wurde mit 145 KJ/m³ bestimmt.

Zusammenfassend läßt sich feststellen, daß körnige Füllstoffe wie Calziumcarbonat lediglich eine graduelle Verbesserung des Rückschrumpfes erbringen. Bei der Verwendung von Holzmehl als Füllstoff ist es zwar prinzipiell möglich, den Rückschrumpf von Bändern und Profilen aus Polyvinylchlorid zu erniedrigen, jedoch wird die Kerbschlagzugzähigkeit erheblich reduziert und die Obrflächengüte entspricht nicht mehr den Anforderungen. Auch bezüglich der Eigenfärbung dieses Füllstoffes ergeben sich nicht mehr tolerierbare Einschränkungen.

Bei der Verwendung von Glasfasern als Füllstoff ergibt sich als nachteilig der starke Abfall der Kerbschlagzugzähigkeit sowie die rauhe Oberfläche mit dem Werkzeugverschleiß.

## Patentansprüche

1. Verwendung von natürlichen Cellulosefasern als Beimischung zu Polyvinylchlorid mit einem Faseranteil von 1-40 Gewichtsprozent, mit einer Faserdicke bis zu 40µm und einer Faserlänge, die im Streubereich bis zu einer Abmessung von 400µm liegt, zur Einschränkung des Rückschrumpfes sowie zur Verbesserung der mechanischen und/oder der Oberflächeneigenschaften von verstärkten Bändern und Profilen.

2. Verwendung von natürlichen Cellulosefasern nach Anspruch 1, dadurcn gekennzeichnet, daß die Fasern vor dem Einmischen in das Polyvinylchlorid mit einem Haftvermittler belegt sind.

## Claims

1. Use of natural cellulose fibres as an additive in polyvinyl chloride with a fibre content of 1-40 per cent by weight, a fibre thickness of up to 40 µm and a fibre length in the range up to 400 µm to restrict the shrinkage and improve the mechanical and/or surface properties of reinforced tapes and profiles.

2. Use of natural cellulose fibres as described in claim 1, characterised by the fact that the fibres are coated with a coupling agent before they are added to the polyvinyl chloride.

## Revendications

1. Utilisation de fibres de cellulose naturelles à titre d'additif au chlorure de polyvinyle avec un pourcentage de fibres en poids de 1-40, avec une épaisseur de fibre allant jusqu'à 40 microns (μm) et une longueur de fibre dans le domaine de dispersion allant jusqu'à une dimension de 400 microns (μm), en vue de réduire le retrait et d'améliorer les caractéristiques mécaniques et/ou de surface des bandes et profilés renforcés.

2. Utilisation de fibres de cellulose naturelles selon la revendiciation 1, caractérisée par le fait que les fibres sont garnies d'un agent adhésif avant le mélange au chlorure de poyvinyle.